# EUROPÄISCHE PATENTSCHRIFT

(11) **EP 2 302 236 B1**
(45) Veröffentlichungstag und Bekanntmachung des Hinweises auf die Patenterteilung: **17.12.2014**
(21) Anmeldenummer: 10009681.7
(22) Anmeldetag: 16.09.2010
(51) Int. Cl.: F16C 1/26

(54) **Außenhülle für Seilzüge, Drähte o.dgl.**
External casing for cables, wires, etc.
Coque extérieure pour câbles de commande, fils d'acier ou analogues

(30) Priorität: 23.09.2009 DE 202009012779 U
(43) Veröffentlichungstag der Anmeldung: 30.03.2011
(73) Patentinhaber: Vornbäumen Stahlseile GmbH & Co. KG, 49186 Bad Iburg (DE)
(72) Erfinder: Thünemann, Anton, 49545 Tecklenburg (DE)
(74) Vertreter: Pott, Ulrich

(56) Entgegenhaltungen:
- DE-A1- 3 625 032
- US-A- 3 013 443
- US-A- 5 241 880

## Beschreibung

Die Erfindung bezieht sich auf eine Außenhülle für Seilzüge, Drähte oder dgl. mit einer Spirale aus einem metallischen Drahtmaterial.

Eine solche Außenhülle ist aus der US 3 013 443 A bekannt.

Herkömmliche Außenhüllen bzw. Außenspiralen für Seilzüge bestehen üblicherweise aus Stahl mit einer Kunststoffummantelung. Derartige Stahlspiralen mit Kunststoffummantelung haben jedoch für viele Einsatzzwecke ein Eigengewicht, das als zu hoch anzusehen ist. Darüber hinaus lässt die Druckfestigkeit einer Stahlspirale für viele Anwendungsfälle zu wünschen übrig.

Es ist Aufgabe der vorliegenden Erfindung, eine Außenhülle für Seilzüge, Drähte oder dgl. Gegenstände bereit zu stellen, die ein geringeres Gewicht als eine aus einem Stahlmaterial bestehende Außenspirale aufweist und darüber hinaus verbesserte Festigkeitseigenschaften aufweist.

Zur Lösung dieser Aufgabe zeichnet sich die Außenhülle für Seilzüge, Drähte oder dgl. der eingangs genannten Art dadurch aus, dass die Spirale als Aluminiumspirale ausgebildet ist mit einem flachgewalzten Aluminiumdraht mit einer Drahtbreite in einem Bereich zwischen 3 mm bis 5 mm und einem Steigungswinkel des Aluminiumdrahtes in der Aluminiumspirale von mehr als 8°, bezogen auf eine Orthogonale zur Längsmittelachse der Aluminiumspirale.

Dabei wurde festgestellt, dass die in der Spirale aneinander liegenden Aluminiumflachdrähte einen Reibfaktor von µ = 0,25 aufweisen, womit ein Reibwinkel von 14° einhergeht. Es wurde weiterhin festgestellt, dass die Druckfestigkeit einer Spirale besser ist, wenn der Reibwinkel größer als der Steigungswinkel ist. Je größer der Reibwinkel ist, umso besser ist die Selbsthemmung der Spirale gegen Torsion bei Druckbelastung.

Bei einer Stahlspirale stellt sich hingegen ein Reibfaktor von µ = 0,15 ein, was einen Reibwinkel von 8,5° ergibt. Damit ist der Reibwinkel bei der erfindungsgemäßen Aluminiumspirale mit dem eingesetzten flachgewalzten Aluminiumdraht bei einem Steigungswinkel von mehr als 8° um mehr als 5,5° größer als bei Stahl, so dass die Verkürzung der Spirale bei Druckbelastung deutlich geringer ist als bei einer Stahlspirale. Damit sind die Festigkeitseigenschaften der Stahlspirale wesentlich zu verbessern, obgleich die Aluminiumspirale ein deutlich geringeres Gewicht aufweist als herkömmliche Stahlspiralen.

Die Seilzugaluminiumspirale kann mit einem oder ohne ein Innenrohr gefertigt werden. Ein Innenrohr kann beispielsweise bei der Herstellung der Spirale mit der Spirale umwickelt werden, aber auch später in eine schon fertig gestellte Seilzugaluminiumspirale geschoben werden. Als Innenrohrwerkstoffe bieten sich POM, PTFE, HDPE, PA12 oder dergleichen an.

Der Durchmesser der Aluminiumspirale liegt in einem Bereich zwischen 3 mm und 15 mm, bei dem Drahtbreiten im Bereich von 3 mm bis 5 mm verarbeitet sind. Der Steigungswinkel der flachgewalzten Aluminiumdrähte innerhalb der Aluminiumspirale liegt in einem Bereich von > 8°, vielfach auch oberhalb von 8,5°. Als Spiralwerkstoffe bieten sich ALMG2,5, ALMG3, ALMG3,5, ALMG4, ALMG4,5 oder ALMG5 an.

Bevorzugtermaßen ist die Aluminiumspirale mit einem Außen- bzw. Kunststoffmantel zu versehen, wodurch die Federwirkung der Aluminiumspirale in vorteilhafter Weise zu unterstützen ist, so dass damit die geringere Elastizität gegenüber Stahl durch die Kunststoffummantelung wieder herzustellen ist. Als Kunststoffmantelwerkstoffe bieten sich PA12, PA11, PA6, PE, PP, PUR, PBT, PVC oder dergleichen an.

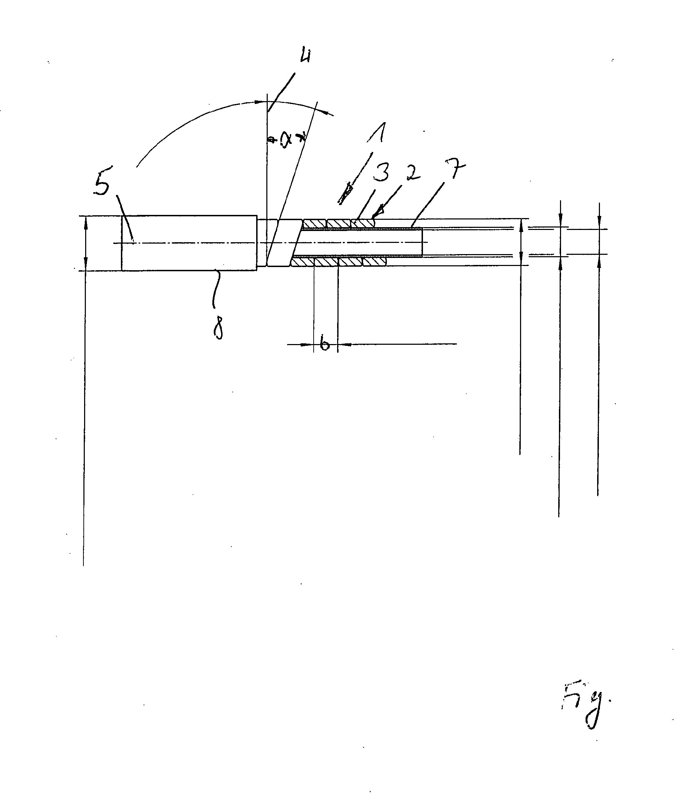

In der einzigen Zeichnung ist ein Ausführungsbeispiel einer erfindungsgemäßen Außenhülle für Seilzüge dargestellt.

Allgemein mit 1 ist die Außenhülle beziffert, die eine allgemein mit 2 bezifferte Spirale aus einem gewendelten flachgewalzten Aluminiumdraht 3 aufweist. Der Aluminiumdraht 3 innerhalb der Aluminiumspirale 2 weist einen Steigungswinkel a von mehr als 8° auf, dargestellt im Ausführungsbeispiel mit ein an Steigungswinkel a von 8,5°, bezogen auf die Orthogonale 4 zur Längsmittelachse 5 der Außenhülle 1.

Die Spirale hat einen Durchmesser im Bereich von 3 mm bis 5 mm, wobei der einzusetzende Aluminiumdraht eine Drahtbreite b hat in einem Bereich zwischen 3 mm und 5 mm. Zudem ist ein Kunststoffinnenrohr 7 vorgesehen. Darüber hinaus ist die Spirale mit einem Kunststoffmantel 8 versehen, der die Elastizität bzw. die Federwirkung der Aluminiumspirale 2 verbessert.

## Patentansprüche

1. Außenhülle (1) für Seilzüge, Drähte oder dergleichen mit einer Spirale (2) aus einem metallischen Drahtmaterial, wobei die Spirale (2) als Aluminiumspirale mit einem flachgewalzten Aluminiumdraht (3) ausgebildet ist, **dadurch gekennzeichnet, dass** der Aluminiumdraht (3) mit einer Drahtbreite (6) in einem Bereich zwischen 3 mm bis 5 mm und einem Steigungswinkel (α) des Aluminiumdrahtes (3) in der Aluminiumspirale (2) von > 8°, bezogen auf eine Orthogonale (4) zur Längsmittelachse (5) der Aluminiumspirale (2) ausgebildet ist.

2. Außenhülle nach Anspruch 1, **dadurch gekennzeichnet, dass** die Aluminiumspirale (2) einen Durchmesser im Bereich zwischen 3 mm bis 5 mm hat.

3. Außenhülle nach Anspruch 1 oder 2, **dadurch gekennzeichnet, dass** der Aluminiumdraht (3) der Aluminiumspirale (2) aus einem ALMG 2,5-, ALMG 3-, ALMG 3,5-, ALMG 4-, ALMG 4,5- oder ALMG 5-Material besteht.

4. Außenhülle nach einem der Ansprüche 1 bis 3, **dadurch gekennzeichnet, dass** die Aluminiumspirale (2) mit einem Innenrohr (7) aus einem Kunststoffmaterial besteht.

5. Außenhülle nach Anspruch 4, **dadurch gekennzeichnet, dass** das Innenrohr (7) aus dem Kunststoffmaterial mit der Aluminiumspirale (2) umwickelt ist.

6. Außenhülle nach Anspruch 5, **dadurch gekennzeichnet, dass** das Innenrohr (7) aus dem Kunststoffmaterial in die Aluminiumspirale (2) eingeschoben ist.

7. Außenhülle nach einem der Ansprüche 4 bis 6, **dadurch gekennzeichnet, dass** das Innenrohr (7) aus einem POM-, PTFE-, HDPI- oder PA12-Material besteht.

8. Außenhülle nach einem der Ansprüche 1 bis 7, **dadurch gekennzeichnet, dass** die Aluminiumspirale (2) mit einem Außenmantel (8) aus einem Kunststoffmaterial versehen ist.

9. Außenhülle nach Anspruch 8, **dadurch gekennzeichnet, dass** der Außenmantel (8) aus einem PA12-, PA11-, PA6-, PE-, PP-, PUR-, PBT-, PVC-Material besteht.

## Claims

1. Outer sheath (1) for cables, wires or the like, comprising a spiral (2) made of a metallic wire material, the spiral (2) being formed as an aluminium spiral comprising a flattened aluminium wire (3), **characterised in that** the aluminium wire (3) is formed having a wire width (6) in a range between 3 mm and 5 mm and a helix angle (α) of the aluminium wire (3) in the aluminium spiral (2) of > 8° in relation to an orthogonal (4) to the longitudinal central axis (5) of the aluminium spiral (2).

2. Outer sheath according to claim 1, **characterised in that** the aluminium spiral (2) has a diameter in the range between 3 mm and 5 mm.

3. Outer sheath according to either claim 1 or claim 2, **characterised in that** the aluminium wire (3) of the aluminium spiral (2) consists of an ALMG 2.5, ALMG 3, ALMG 3.5, ALMG 4, ALMG 4.5 or ALMG 5 material.

4. Outer sheath according to any of claims 1 to 3, **characterised in that** the aluminium spiral (2) has an inner tube (7) which consists of a plastics material.

5. Outer sheath according to claim 4, **characterised in that** the aluminium spiral (2) is wound around the inner tube (7) made of the plastics material.

6. Outer sheath according to claim 5, **characterised in that** the inner tube (7) made of the plastics material is inserted into the aluminium spiral (2).

7. Outer sheath according to any of claims 4 to 6, **characterised in that** the inner tube (7) consists of a POM, PTFE, HDPI or PA12 material.

8. Outer sheath according to any of claims 1 to 7, **characterised in that** the aluminium spiral (2) is provided with an outer casing (8) made of a plastics material.

9. Outer sheath according to claim 8, **characterised in that** the outer casing (8) consists of a PA12, PA11, PA6, PE, PP, PUR, PBT or PVC material.

## Revendications

1. Coque extérieure (1) pour câbles de commande, fils métalliques ou similaires avec une spirale (2) en un matériau de fil métallique,
la spirale (2) étant réalisée comme une spirale d'aluminium avec un fil d'aluminium (3) laminé à plat, **caractérisée en ce que** le fil d'aluminium (3) est réalisé avec une largeur de fil (6) comprisse dans une plage entre 3 et 5 mm et un angle de torsion (α) du fil d'aluminium (3) dans la spirale d'aluminium (2) > 8°, par rapport à une orthogonale (4) à l'axe médian longitudinal (5) de la spirale d'aluminium (2).

2. Coque extérieure selon la revendication 1, **caractérisée en ce que** la spirale d'aluminium (2) présente un diamètre compris dans la plage entre 3 et 5 mm.

3. Coque extérieure selon la revendication 1 ou 2, **caractérisée en ce que** le fil d'aluminium (3) de la spirale d'aluminium (2) se compose d'un matériau ALMG 2,5, ALMG 3, ALMG 3,5, ALMG 4, ALMG 4,5 ou ALMG 5.

4. Coque extérieure selon l'une quelconque des revendications 1 à 3, **caractérisée en ce que** la spirale d'aluminium (2) se compose d'un tube intérieur (7) en un matériau plastique.

5. Coque extérieure selon la revendication 4, **caractérisée en ce que** le tube intérieur (7) en matériau plastique est enroulé avec la spirale d'aluminium (2).

6. Coque extérieure selon la revendication 5, **caractérisée en ce que** le tube intérieur (7) en matériau plastique est inséré dans la spirale d'aluminium (2).

7. Coque extérieure selon l'une quelconque des revendications 4 à 6, **caractérisée en ce que** le tube intérieur (7) se compose d'un matériau POM, PTFE, HDPI ou PA12.

8. Coque extérieure selon l'une quelconque des revendications 1 à 7, **caractérisée en ce que** la spirale d'aluminium (2) est pourvue d'une enveloppe extérieure (8) en un matériau plastique.

9. Coque extérieure selon la revendication 8, **caractérisée en ce que** l'enveloppe extérieure (8) se compose d'un matériau PA12, PA11, PA6, PE, PP, PUR, PBT, PVC.
